# EUROPÄISCHE PATENTSCHRIFT

(11) **EP 1 884 216 B1**
(45) Veröffentlichungstag und Bekanntmachung des Hinweises auf die Patenterteilung: **02.12.2009**
(21) Anmeldenummer: 07011658.7
(22) Anmeldetag: 14.06.2007
(51) Int. Cl.: A61C 7/14, A61C 7/16

(54) **Kieferorthopädisches Element**
Orthopaedic element of the jaw
Elément orthopédique de la mâchoire

(30) Priorität: 02.08.2006 DE 102006036972
(43) Veröffentlichungstag der Anmeldung: 06.02.2008
(73) Patentinhaber: DENTAURUM J.P. WINKELSTROETER KG, 75228 Ispringen (DE)
(72) Erfinder: Stolp, Kurt, 75245 Neulingen-Nussbaum (DE); Wigger, Klaus, 75245 Neulingen (DE); Müller, Klaus, 75228 Ispringen (DE); Ochs, Werner, 75334 Straubenhardt (DE)
(74) Vertreter: Karrais, Martin

(56) Entgegenhaltungen:
- EP-A- 1 184 005
- US-A1- 2002 150 857
- US-A1- 2006 166 159

## Beschreibung

Die Erfindung betrifft ein kieferorthopädisches Element mit den Merkmalen des Oberbegriffes von Patentanspruch 1.

Außerdem betrifft die Erfindung ein Verfahren zur Herstellung eines derartigen kieferorthopädischen Elementes.

Kieferorthopädische Elemente können beispielsweise im Rahmen einer kieferorthopädischen Behandlung zur Korrektur der Fehlstellung eines Zahns zum Einsatz kommen und zum Beispiel in Form eines Brackets oder eines Bukkal- oder Lingualröhrchens ausgestaltet sein. Um die Fehlstellung des Zahns zu korrigieren, ist es bekannt, das kieferorthopädische Element am Zahn zu befestigen und den Grundkörper mit einer Aufnahme, beispielsweise einem Schlitz oder einer zylinderförmigen Öffnung, auszugestalten, in die ein elastischer Bogendraht eingebracht wird. Über den Bogendraht können Richtkräfte auf den Zahn ausgeübt werden, so dass sich dessen Stellung verändert. Die Fixierung des Elementes am Zahn geschieht mittels eines Klebers. Um einen hinreichend starken Verbund zwischen dem Element und dem Zahn zu erreichen, wird die Basisfläche des Elementes mit einer Retentionsstruktur versehen, die eine Vielzahl von Vertiefungen und/oder Erhebungen aufweist. Dies ermöglicht es, die Oberflächen der miteinander zu verklebenden Bereiche zu vergrößern und dadurch den Klebeverbund zu verbessern. Die Retentionsstruktur kann beispielsweise netzförmig ausgestaltet sein, wie dies aus der Offenlegungsschrift DE 35 19 213 A1 bekannt ist.

Um dem Kieferorthopäden die Zuordnung des kieferorthopädischen Elementes zu einem bestimmten Zahntyp zu erleichtern, ist es bekannt, an der Basisfläche eine Markierung anzubringen, beispielsweise eine Zahnbezeichnung in Form einer ziffernmäßigen Abkürzung gemäß dem FDI-System (das heißt gemäß dem Identifizierungssystem der Fédération Dentaire Internationale). In der EP 0 876 801 B1 wird hierzu vorgeschlagen, die Retentionsstruktur netzförmig auszubilden und mit einer Lasereinrichtung zu bearbeiten, die die Markierung erzeugt, so dass sich die Markierung über die netzartige Struktur erstreckt. Hierbei besteht aber das Problem, dass die Markierung nicht in allen Fällen eindeutig erkennbar ist.

Aus der US 2006/0166159 A1 ist ein kieferorthopädisches Element mit den Merkmalen des Oberbegriffes von Patentanspruch 1 in Form eines Brackets bekannt, bei dem man einen vorgeformten Grünling zur Ausbildung des Brackets sintert. Noch vor der Sinterung werden mittels eines Laserstrahls an einer Basisfläche des Grünlings eine Retentionsstruktur und eine Markierung erzeugt.

In der EP 1 184 005 A2 wird ein Bracket beschrieben, bei dem man an der Basisfläche ein Netz anordnet mit einer Vielzahl rechteckiger Taschen, die eine Retentionsstruktur ausbilden. Eingeformt in das Netz ist eine zahlenförmige Markierung.

Aufgabe der vorliegenden Erfindung ist es, ein kieferorthopädisches Element der eingangs genannten Art sowie ein Verfahren zu dessen Herstellung bereitzustellen, bei dem die Markierung auf einfache Weise eindeutig erkennbar ist.

Diese Aufgabe wird durch ein kieferorthopädisches Element mit den Merkmalen von Patentanspruch 1 gelöst.

Die Markierung ist besser erkennbar, wenn sie in einem Bereich der Basisfläche angeordnet ist, die keine Retentionsstruktur aufweist. Deshalb erstreckt sich die Retentionsstruktur nur über einen Teilbereich der Basisfläche und der retentionsstrukturfreie Restbereich der Basisfläche weist die Markierung auf. Die Markierung weist gemäß der Erfindung eine reduzierte Oberfläche auf, das heißt eine Oberfläche, die einer chemischen Reduktion unterworfen ist. Beispielsweise kann vorgesehen sein, dass im retentionsstrukturfreien Restbereich der Basisfläche eine ansonsten vorhandene Oxydschicht mittels des Laserstrahls entfernt ist. Der Laserstrahl kann hierzu unter einer Schutzgasatmosphäre auf die Basisfläche einwirken.

Es kann vorgesehen sein, dass die Markierung den retentionsstrukturfreien Restbereich der Basisfläche teilweise überdeckt. Bei einer derartigen Ausführungsform wird im retentionsstrukturfreien Restbereich der Basisfläche die Markierung angeordnet. Die Markierung kann durch eine Bearbeitung des retentionsstrukturfreien Restbereiches erzeugt werden.

Die Größe der Retentionsstruktur ist einerseits durch die Größe der gesamten Basisfläche und andererseits durch die Größe des retentionsstrukturfreien Restbereiches der Basisfläche begrenzt. Um trotz dieser Limitierung einen stark belastbaren Verbund zwischen dem kieferorthopädischen Element und dem Zahn herzustellen, ist es von Vorteil, wenn die Retentionsstruktur eine umschließende geometrische Figur, insbesondere einen Ring ausbildet. In einer derartigen Form kann die Retentionsstruktur die Markierung umgeben.

Insbesondere kann die Retentionsstruktur den Rand der Basisfläche zumindest teilweise überdecken. Es hat sich überraschenderweise herausgestellt, dass durch eine umschließende, beispielsweise ringförmige Retentionsstruktur ein besonders belastungsfähiger Klebeverbund zwischen dem Element und dem Zahn erzielt werden kann, obwohl die Retentionsstruktur nur einen Teilbereich der Basisfläche überdeckt. Die umschließende Retentionsstruktur kann den retentionsstrukturfreien Restbereich umgeben, der die Markierung aufweist. Durch die umschließende Retentionsstruktur kann das am Zahn befestigte kieferorthopädische Element zuverlässig sowohl Druck- als auch Zugkräften standhalten. Das kieferorthopädische Element weist somit trotz der eingeschränkten Ausdehnung der Retentionsstruktur eine sehr hohe Haftkraft auf.

Wie bereits erläutert, kann die Retentionsstruktur beispielsweise netzförmig ausgestaltet sein. Von besonderem Vorteil ist es, wenn die Retentionsstruktur durch physikalische, chemische oder mechanische additive und/oder subtraktive Bearbeitung der Basisfläche erzeugt ist. Es kann beispielsweise vorgesehen sein, dass die Retentionsstruktur durch eine spanabtragende Bearbeitung der Basisfläche erzeugt ist, insbesondere durch Fräsen. Es kann auch vorgesehen sein, dass die Retentionsstruktur durch Ätzen der Basisfläche erzeugt ist oder auch durch ein Strahlverfahren, beispielsweise Sandstrahlen. Durch die physikalische, chemische oder mechanische additive und/oder subtraktive Bearbeitung der Basisfläche wird deren Oberfläche durch die Erzeugung von Vertiefungen und/oder Erhebungen vergrößert.

Bei einer bevorzugten Ausgestaltung ist die Retentionsstruktur mittels eines Laserstrahls erzeugt. Hierbei handelt es sich um eine physikalische Bearbeitung der Basisfläche. Die Retentionsstruktur kann beispielsweise dadurch erzeugt werden, dass das Material des Grundkörpers in einem Teilbereich der Basisfläche aufgeschmolzen wird. Durch das Aufschmelzen können auf einfache Weise kraterartige Vertiefungen und/oder Erhebungen erzeugt werden, die die Oberfläche der Basisfläche vergrößern. Eine derartige Laserbearbeitung ist aus der europäischen Patentschrift EP 0 841 877 B1 bekannt. Zum Aufschmelzen kann der Laserstrahl im Bereich der Retentionsstruktur schrittweise über die Basisfläche bewegt werden, so dass sich einzelne Einwirkungsbereiche des Laserstrahls ergeben, in denen der Werkstoff des Grundkörpers jeweils aufgeschmolzen wird.

Die Markierung ist erfindungsgemäß mittels eines Laserstrahls erzeugt. Hierzu ist es günstig, wenn der Laserstrahl kontinuierlich zumindest über einen Abschnitt des retentionsstrukturfreien Restbereiches der Basisfläche bewegt wird. Zur Erzeugung der Markierung kann der Laserstrahl eine geringere Energiedichte aufweisen als zur Erzeugung der Retentionsstruktur.

Bei einer bevorzugten Ausführungsform weist die Retentionsstruktur eine oxidierte Oberfläche aus. Diese kann auf einfache Weise dadurch erzielt werden, dass die Retentionsstruktur durch Bearbeitung eines Teilbereiches der Basisfläche mit einem Laser im Beisein von Sauerstoff, das heißt ohne Schutzgas, erfolgt. Der Laserstrahl erwärmt den Werkstoff des Grundkörpers, so dass dieser oxidiert und sich dadurch optisch vom retentionsstrukturfreien Restbereich der Basisfläche unterscheidet.

Die Retentionsstruktur weist bei einer weiteren bevorzugten Ausführungsform der Erfindung ein Muster mit einer regelmäßigen oder unregelmäßigen Struktur auf, beispielsweise ein rasterförmiges Muster. Es hat sich gezeigt, dass durch ein derartiges Muster ein besonders guter Klebeverbund zwischen dem kieferorthopädischen Element und dem Zahn erzielbar ist.

Von Vorteil ist es, wenn die Markierung in sich keine ohne weiteres erkennbare Struktur aufweist, das heißt verglichen mit der Retentionsstruktur ist die Markierung in sich praktisch strukturlos. Durch die unterschiedlichen Strukturen wird die Erkennbarkeit der Markierung verbessert.

Besonders günstig ist es, wenn sich die Markierung optisch von der Retentionsstruktur unterscheidet. So kann beispielsweise vorgesehen sein, dass die Markierung heller oder dunkler als die Retentionsstruktur ausgestaltet ist oder sich farblich von der Retentionsstruktur abhebt.

Das kieferorthopädische Element besteht bei einer vorteilhaften Ausführungsform ganz oder teilweise aus Metall.

Es kann auch vorgesehen sein, dass das kieferorthopädische Element ganz oder teilweise aus Keramik besteht.

Wie bereits erläutert, kann das kieferorthopädische Element beispielsweise in Form eines Brackets oder eines Bukkal- oder Lingualröhrchens ausgestaltet sein. Das Bracket kann einen Sockel aufweisen mit der am Zahn befestigbaren Basisfläche. Außerdem kann das Bracket einen Bracketkörper umfassen, der vom Sockel absteht und einen von mesial nach distal verlaufenden Schlitz umfasst zur Aufnahme eines Bogendrahtes sowie mindestens ein Flügelpaar mit einem in gingivale Richtung und einem in okklusale Richtung vom Schlitz abstehenden Flügel.

Wie bereits erwähnt, betrifft die Erfindung auch ein Verfahren zur Herstellung eines kieferorthopädischen Elementes der voranstehend erläuterten Art. Bei diesem Verfahren versieht man eine Basisfläche des Elementes mit einer Retentionsstruktur zur Verbesserung des Klebeverbundes zwischen Element und Zahn und mit einer Markierung zur Zuordnung des Elementes zu einem Zahntyp. Hierbei versieht man die Basisfläche nur in einem Teilbereich mit der Retentionsstruktur und die Markierung erzeugt man im retentionsstrukturfreien Restbereich der Basisfläche mittels eines Laserstrahls. Wie bereits erläutert, wird die Erkennbarkeit der Markierung deutlich gesteigert, wenn man diese in einem Restbereich der Basisfläche anordnet, der keine Retentionsstruktur aufweist. Die Markierung wird erfindungsgemäß durch Behandlung der Basisfläche mit einem Laserstrahl in einer Schutzgasatmosphäre erzeugt. Durch eine derartige Behandlung kann insbesondere ein Farbumschlag der Basisfläche erzielt werden, so dass sich die Markierung optisch von der Retentionsstruktur unterscheidet. Sie kann beispielsweise heller oder dunkler als die Retentionsstruktur ausgestaltet sein.

Es kann vorgesehen sein, dass man den retentionsstrukturfreien Restbereich der Basisfläche teilweise von der Markierung überdeckt.

Vorzugsweise bearbeitet man einen Teilbereich der Basisfläche physikalisch, chemisch oder mechanisch additiv und/oder subtraktiv zur Erzeugung der Retentionsstruktur. Alternativ kann vorgehen sein, dass man in einem Teilbereich der Basisfläche eine vorgefertigte netzartige Struktur befestigt. Die physikalische, chemische oder mechanische additive und/oder subtraktive Bearbeitung vereinfacht allerdings die Herstellung des kieferorthopädischen Elementes.

Bei einer besonders bevorzugten Ausgestaltung des erfindungsgemäßen Verfahrens erzeugt man die Retentionsstruktur mittels eines Laserstrahls. Wie bereits erläutert, kann dadurch auf kostengünstige Weise ein kieferorthopädisches Element mit einer eindeutig erkannbaren Markierung erzeugt werden.

Als besonders zweckmäßig hat sich der Einsatz eines YAG-Lasers zur Erzeugung der Retentionsstruktur und/oder der Markierung erwiesen.

Die Retentionsstruktur wird bei einer vorteilhaften Ausgestaltung des Verfahrens durch Behandlung der Basisfläche mit einem Laserstrahl im Beisein von Sauerstoff erzeugt, das heißt die Behandlung mit dem Laserstrahl erfolgt ohne Schutzgas. Dies hat zur Folge, dass die Basisfläche im Bereich der Retentionsstruktur eine Oxidationsschicht erhält.

Bei einem besonders kostengünstigen Verfahren zur Herstellung eines kieferorthopädischen Elementes wird zur Erzeugung der Retentionsstruktur und der Markierung derselbe Laserstrahl verwendet, wobei der Laserstrahl zur Erzeugung der Retentionsstruktur eine höhere Energiedichte aufweist als zur Erzeugung der Markierung. Die höhere Energiedichte kann durch eine Fokussierung des Laserstrahls erzielt werden. Die höhere Energiedichte hat zur Folge, dass die Basisfläche im Auftreffbereich des Laserstrahls nach sehr kurzer Zeit aufgeschmolzen wird, und durch das Aufschmelzen können auf einfache Weise Vertiefungen und/oder Erhebungen erzielt werden, durch die der Klebeverbund zwischen dem kieferorthopädischen Element und dem Zahn verbessert wird.

Günstig ist es, wenn man zur Erzeugung der Retentionsstruktur und der Markierung denselben Laserstrahl verwendet, wobei man den Laserstrahl zur Erzeugung der Retentionsstruktur schrittweise und zur Erzeugung der Markierung kontinuierlich über die Basisfläche bewegt. Die schrittweise Behandlung der Basisfläche mit dem Laserstrahl hat zur Folge, dass die Retentionsstruktur ein rasterförmiges Muster erhält, wohingegen die Markierung aufgrund der kontinuierlichen Bewegung des Laserstrahl keine ohne weiteres erkennbare Struktur aufweist. Durch die unterschiedlichen Strukturen wird die Erkennbarkeit der Markierung verbessert.

Die nachfolgende Beschreibung einer bevorzugten Ausführungsform der Erfindung dient im Zusammenhang mit der Zeichnung der näheren Erläuterung. Es zeigen:
- Figur 1:: eine perspektivische Darstellung eines kieferorthopädischen Elementes schräg von oben und
- Figur 2:: eine perspektivische Darstellung des kieferorthopädischen Elementes aus Figur 1 schräg von unten.

In der Zeichnung ist ein erfindungsgemäßes kieferorthopädisches Element in Form eines Brackets 10 schematisch dargestellt. Es umfasst einen Grundkörper 11, der auf seiner Rückseite eine Basisfläche 12 ausbildet und auf seiner Vorderseite ein erstes Flügelpaar 14 und ein zweites Flügelpaar 15 trägt. Die beiden Flügelpaare 14 und 15 weisen jeweils einen okklusalseitigen Flügel 17 bzw. 18 und einen gingivalseitigen Flügel 19 bzw. 20 auf und sind im Abstand zueinander angeordnet. Zwischen sich definieren die beiden Flügelpaare 14 und 15 einen Freiraum 22, der sich von der gingivalen Seite bis zur okklusalen Seite des Brackets 10 erstreckt. Die okklusalseitigen Flügel 17, 18 und die gingivalseitigen Flügel 19, 20 begrenzen einen Schlitz 24, der in mesial-distaler Richtung verläuft und sich von der mesialen Seite bis zur distalen Seite des Brackets 10 erstreckt. Der Schlitz 24 dient in üblicher Weise zur Aufnahme eines an sich bekannten und deshalb in der Zeichnung nicht dargestellten Bogendrahtes.

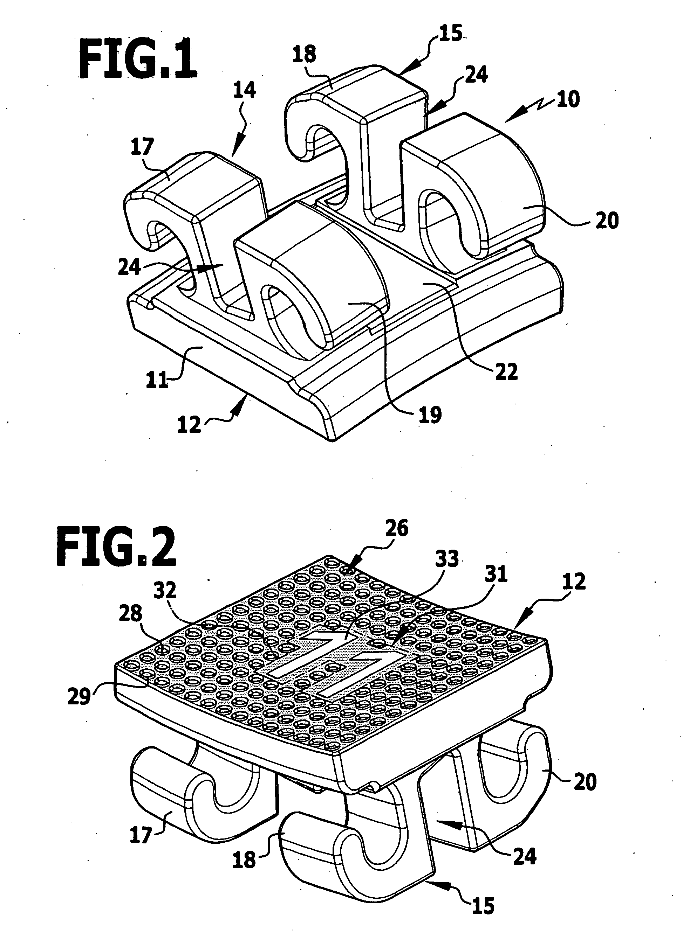

Mit seines Basisfläche 12 kann das Bracket 10 mit einem Zahn verklebt werden. Um einen möglichst stabilen Klebeverbund zwischen dem Bracket 10 und dem Zahn zu erzielen, weist die Basisfläche 12 eine Retentionsstruktur 26 auf mit einer Vielzahl von kraterartigen Vertiefungen 28, die jeweils von einer von der Basisfläche 12 abstehenden Erhebung in Form eines Wulstes umgeben sind. Die Retentionsstruktur 26 bildet insgesamt ein rasterförmiges Muster und erstreckt sich lediglich über einen Teilbereich der Basisfläche 12. Wie aus Figur 2 deutlich wird, bildet die Retentionsstruktur 26 einen geschlossenen Ring aus, der den Rand der Basisfläche 12 vollständig überdeckt und in einem mittigen Bereich der Basisfläche 12 einen retentionsstrukturfreien Restbereich 31 in Umfangsrichtung umgibt. Der Rand 32 des retentionsstrukturfreien Restbereiches 31 ist in Figur 2 zur besseren Veranschaulichung strichpunktiert dargestellt.

Innerhalb des retentionsstrukturfreien Restbereiches 31 ist eine Markierung 33 angeordnet in Form eines ziffernmäßigen Abkürzung des Zahntyps, dem das Bracket 10 zugeordnet ist. In der dargestellten Ausführungsform trägt das Bracket 10 auf seiner Basisfläche 12 als Markierung die Ziffernfolge "11". Die Markierung 33 unterscheidet sich optisch vom übrigen Bereich des retentionsstrukturfreien Restbereiches 31 und auch von der Retentionsstruktur 26, die Markierung 33 ist nämlich heller als der Rest der Basisfläche 12 ausgebildet.

Die Retentionsstruktur 26 wird mit Hilfe eines Laserstrahls, vorzugsweise unter Verwendung eines YAG-Lasers, hergestellt, der schrittweise über die Basisfläche 12 bewegt wird und im Bereich der einzelnen Auftreffpunkte den Werkstoff des Brackets 10 aufschmilzt unter Ausbildung einer kraterartigen Vertiefung 28, die von einem Wulst 29 umgeben ist. Auf diese Weise ergeben sich eine Vielzahl von Vertiefungen und/oder Erhebungen, durch die der Klebeverbund zwischen dem Bracket 10 und dem zugeordneten Zahn verbessert werden kann. Die Einwirkung des Laserstrahls auf die Basisfläche 12 zur Erzeugung der Retentionsstruktur 26 erfolgt in Gegenwart von Sauerstoff, das heißt ohne Schutzgasatmosphäre. Dies führt zu einer Oxidation der Basisfläche 12 im Bereich der Retentionsstruktur 26.

Der zur Erzeugung der Retentionsstruktur 26 zum Einsatz kommende Laserstrahl wird auch zur Erzeugung der Markierung 33 verwendet. Allerdings wird der Laserstrahl zur Erzeugung der Markierung 33 defokussiert, so dass er eine geringere Energiedichte aufweist als bei der Erzeugung der Retentionsstruktur 26. Außerdem wird der Laserstrahl zur Erzeugung der Markierung 33 kontinuierlich über die Basisfläche 12 bewegt. Die Einwirkung des Laserstrahls zur Erzeugung der Markierung 33 erfolgt ohne Beisein von Sauerstoff, nämlich unter einer Schutzgasatmosphäre. Dies hat zur Folge, dass eine im retentionsstrukturfreien Restbereich 31 vorhandene Oxydschicht der Basisfläche 12 im Einwirkungsbereich des Laserstrahls oberflächlich, das heißt bis zu einer Dicke von einigen Mikrometern, entfernt wird, so dass sich ein Farbumschlag einstellt und die mittels des Laserstrahls erzeugte Markierung 33 deutlich erkennbar ist.

## Patentansprüche

1. Kieferorthopädisches Element (10) mit einem Grundkörper (11), der eine Basisfläche (12) zur Fixierung des Elementes an einem Zahn aufweist, wobei die Basisfläche (12) eine Retentionsstruktur (26) mit Vertiefungen (28) und/oder Erhebungen (29) zur Verbesserung des Klebeverbundes zwischen Element und Zahn aufweist sowie mindestens eine Markierung (33) zur Zuordnung des Elementes zu einem Zahntyp, wobei die Retentionsstruktur (26) die Basisfläche (12) nur teilweise überdeckt und der retentionsstrukturfreie Restbereich (31) der Basisfläche (12) die Markierung (33) aufweist, die mittels eines Laserstrahls erzeugt ist, **dadurch gekennzeichnet, dass** die Markierung (33) eine reduzierte Oberfläche aufweist.

2. Kieferorthopädisches Element nach Anspruch 1, **dadurch gekennzeichnet, dass** die Markierung (33) den retentionsstrukturfreien Restbereich (31) der Basisfläche (12) nur teilweise überdeckt.

3. Kieferorthopädisches Element nach einem der voranstehenden Ansprüche, **dadurch gekennzeichnet, dass** die Retentionsstruktur (26) eine umschließende geometrische Figur, insbesondere einen Ring ausbildet.

4. Kieferorthopädisches Element nach Anspruch 3, **dadurch gekennzeichnet, dass** die Retentionsstruktur (26) den Rand der Basisfläche (12) zumindest teilweise überdeckt.

5. Kieferorthopädisches Element nach einem der voranstehenden Ansprüche, **dadurch gekennzeichnet, dass** die Retentionsstruktur (26) durch physikalische, chemische oder mechanische additive und/oder subtraktive Bearbeitung der Basisfläche (12) erzeugt ist.

6. Kieferorthopädisches Element nach einem der voranstehenden Ansprüche, **dadurch gekennzeichnet, dass** die Retentionsstruktur (26) mittels eines Laserstrahls erzeugt ist.

7. Kieferorthopädisches Element nach einem der voranstehenden Ansprüche, **dadurch gekennzeichnet, dass** die Retentionsstruktur (26) eine oxidierte Oberfläche aufweist.

8. Kieferorthopädisches Element nach einem der voranstehenden Ansprüche, **dadurch gekennzeichnet, dass** die Retentionsstruktur (26) ein Muster mit einer regelmäßigen oder unregelmäßigen Struktur aufweist.

9. Kieferorthopädisches Element nach einem der voranstehenden Ansprüche, **dadurch gekennzeichnet, dass** die Markierung (33) in sich keine ohne weiteres erkennbare Struktur aufweist.

10. Kieferorthopädisches Element nach einem der voranstehenden Ansprüche, **dadurch gekennzeichnet, dass** sich die Markierung (33) optisch von der Retentionsstruktur (26) unterscheidet.

11. Kieferorthopädisches Element nach einem der voranstehenden Ansprüche, **dadurch gekennzeichnet, dass** das kieferorthopädische Element (10) ganz oder teilweise aus Metall besteht.

12. Kieferorthopädisches Element nach einem der Ansprüche 1 bis 10, **dadurch gekennzeichnet, dass** das kieferorthopädische Element (10) ganz oder teilweise aus Keramik besteht.

13. Kieferorthopädisches Element nach einem der voranstehenden Ansprüche **dadurch gekennzeichnet, dass** das kieferorthopädische Element ein Bracket (10) oder ein Bukkal- oder Lingualröhrchen ausbildet.

14. Verfahren zur Herstellung eines kieferorthopädischen Elementes nach einem der voranstehenden Ansprüche, wobei man eine Basisfläche des Elementes mit einer Retentionsstruktur zur Verbesserung des Klebeverbundes zwischen Element und Zahn sowie mit einer Markierung zur Zuordnung des Elements zu einem Zahntyp versieht, wobei man die Basisfläche nur in einem Teilbereich mit der Retentionsstruktur versieht und die Markierung im retentionsstrukturfreien Restbereich der Basisfläche mittels eines Laserstrahls erzeugt, **dadurch gekennzeichnet, dass** man die Markierung durch Behandlung der Basisfläche mit einem Laserstrahl in einer Schutzgasatmosphäre erzeugt, so dass die Markierung eine reduzierte Oberfläche aufweist.

15. Verfahren nach Anspruch 14, **dadurch gekennzeichnet, dass** man den retentionsstrukturfreien Restbereich der Basisfläche teilweise mit der Markierung überdeckt.

16. Verfahren nach Anspruch 14 oder 15, **dadurch gekennzeichnet, dass** man einen Teilbereich der Basisfläche physikalisch, chemisch oder mechanisch additiv und/oder subtraktiv bearbeitet zur Erzeugung der Retentionsstruktur.

17. Verfahren nach einem der Ansprüche 14 bis 16, **dadurch gekennzeichnet, dass** man die Retentionsstruktur mittels eines Laserstrahls erzeugt.

18. Verfahren nach Anspruch 17, **dadurch gekennzeichnet, dass** man einen YAG-Laser verwendet.

19. Verfahren nach einem der Ansprüche 14 bis 18, **dadurch gekennzeichnet, dass** man die Retentionsstruktur durch Behandlung der Basisfläche mit einem Laserstrahl im Beisein von Sauerstoff erzeugt.

20. Verfahren nach einem der Ansprüche 14 bis 19, **dadurch gekennzeichnet, dass** man zur Erzeugung der Retentionsstruktur und der Markierung denselben Laserstrahl verwendet, wobei der Laserstrahl zur Erzeugung der Retentionsstruktur eine höhere Energiedichte aufweist als zur Erzeugung der Markierung.

21. Verfahren nach einem der Ansprüche 14 bis 20, **dadurch gekennzeichnet, dass** man zur Erzeugung der Retentionsstruktur und der Markierung denselben Laserstrahl verwendet, wobei man den Laserstrahl zur Erzeugung der Retentionsstruktur schrittweise und zur Erzeugung der Markierung kontinuierlich über die Basisfläche bewegt.

## Claims

1. Orthodontic element (10) with a main body (11), which comprises a base surface (12) for fixing the element to a tooth, the base surface (12) comprising a retention structure (26) with depressions (28) and/or elevations (29) for improving the adhesive bond between element and tooth and at least one marking (33) for allocating the element to a tooth type, the retention structure (26) covering the base surface (12) only partially, and the retention structure-free remaining area (31) of the base surface (12) comprising the marking (33) which is produced by a laser beam, **characterized in that** the marking (33) has a reduced surface.

2. Orthodontic element in accordance with claim 1, **characterized in that** the marking (33) covers the retention structure-free remaining area (31) of the base surface (12) only partially.

3. Orthodontic element in accordance with any one of the preceding claims, **characterized in that** the retention structure (26) forms an enclosing geometrical figure, in particular, a ring.

4. Orthodontic element in accordance with claim 3, **characterized in that** the retention structure (26) covers the edge of the base surface (12) at least partially.

5. Orthodontic element in accordance with any one of the preceding claims, **characterized in that** the retention structure (26) is produced by physical, chemical or mechanical additive and/or subtractive processing of the base surface (12).

6. Orthodontic element in accordance with any one of the preceding claims, **characterized in that** the retention structure (26) is produced by a laser beam.

7. Orthodontic element in accordance with any one of the preceding claims, **characterized in that** the retention structure (26) has an oxidized surface.

8. Orthodontic element in accordance with any one of the preceding claims, **characterized in that** the retention structure (26) has a pattern with a regular or irregular structure.

9. Orthodontic element in accordance with any one of the preceding claims, **characterized in that** the marking (33) in itself has no readily recognizable structure.

10. Orthodontic element in accordance with any one of the preceding claims, **characterized in that** the marking (33) differs optically from the retention structure (26).

11. Orthodontic element in accordance with any one of the preceding claims, **characterized in that** the orthodontic element (10) consists entirely or partially of metal.

12. Orthodontic element in accordance with any one of claims 1 to 10, **characterized in that** the orthodontic element (10) consists entirely or partially of a ceramic material.

13. Orthodontic element in accordance with any one of the preceding claims, **characterized in that** the orthodontic element forms a bracket (10) or a buccal or lingual tube.

14. Method of manufacturing an orthodontic element in accordance with any one of the preceding claims, wherein a base surface of the element is provided with a retention structure for improving the adhesive bond between element and tooth and with a marking for allocating the element to a tooth type, the base surface being provided with the retention structure only in a partial area thereof, and the marking being produced in the retention structure-free remaining area of the base surface by a laser beam, **characterized in that** the marking is produced by treating the base surface with a laser beam in a protective gas atmosphere, so that the marking has a reduced surface.

15. Method in accordance with claim 14, **characterized in that** the retention structure-free remaining area of the base surface is partially covered by the marking.

16. Method in accordance with claim 14 or 15, **characterized in that** a partial area of the base surface is physically, chemically or mechanically additively and/or subtractively processed in order to produce the retention structure.

17. Method in accordance with any one of claims 14 to 16, **characterized in that** the retention structure is produced by a laser beam.

18. Method in accordance with claim 17, **characterized in that** a YAG laser is used.

19. Method in accordance with any one of claims 14 to 18, **characterized in that** the retention structure is produced by treating the base surface with a laser beam in the presence of oxygen.

20. Method in accordance with any one of claims 14 to 19, **characterized in that** the same laser beam is used to produce the retention structure and the marking, the laser beam for producing the retention structure having a higher energy density than for producing the marking.

21. Method in accordance with any one of claims 14 to 20, **characterized in that** the same laser beam is used for producing the retention structure and the marking, the laser beam being moved stepwise for producing the retention structure and continuously over the base surface for producing the marking.

## Revendications

1. Elément d'orthopédie dento-faciale (10) comprenant un corps de base (11) muni d'une surface de base (12) pour la fixation de l'élément sur une dent, la surface de base (12) présentant une structure de rétention (26) avec des creux (28) et/ou des proéminences (29) pour améliorer la liaison de collage entre l'élément et la dent, ainsi qu'au moins un marquage (33) pour l'affectation de l'élément à un type de dent, et la structure de rétention (26) ne couvrant que partiellement la surface de base (12), tandis que la zone restante (31) de la surface de base (12), exempte de structure de rétention, comporte le marquage (33) qui est produit au moyen d'un rayon laser, **caractérisé en ce que** le marquage (33) présente une surface ayant subi une réduction.

2. Elément d'orthopédie dento-faciale selon la revendication 1, **caractérisé en ce que** le marquage (33) ne couvre que partiellement la zone restante (31) de la surface de base (12), exempte de structure de rétention.

3. Elément d'orthopédie dento-faciale selon l'une des revendications précédentes, **caractérisé en ce que** la structure de rétention (26) forme une figure géométrique périphérique fermée, en particulier un anneau.

4. Elément d'orthopédie dento-faciale selon la revendication 3, **caractérisé en ce que** la structure de rétention (26) recouvre au moins partiellement le bord de la surface de base (12).

5. Elément d'orthopédie dento-faciale selon l'une des revendications précédentes, **caractérisé en ce que** la structure de rétention (26) est produite par un usinage ou un traitement additif et/ou soustractif du type physique, chimique ou mécanique, de la surface de base (12).

6. Elément d'orthopédie dento-faciale selon l'une des revendications précédentes, **caractérisé en ce que** la structure de rétention (26) est produite au moyen d'un rayon laser.

7. Elément d'orthopédie dento-faciale selon l'une des revendications précédentes, **caractérisé en ce que** la structure de rétention (26) présente un état de surface oxydé.

8. Elément d'orthopédie dento-faciale selon l'une des revendications précédentes, **caractérisé en ce que** la structure de rétention (26) présente une trame ou un dessin avec une structure régulière ou irrégulière.

9. Elément d'orthopédie dento-faciale selon l'une des revendications précédentes, **caractérisé en ce que** le marquage (33) ne présente en soi aucune structure reconnaissable d'emblée.

10. Elément d'orthopédie dento-faciale selon l'une des revendications précédentes, **caractérisé en ce que** le marquage (33) se distingue optiquement de la structure de rétention (26).

11. Elément d'orthopédie dento-faciale selon l'une des revendications précédentes, **caractérisé en ce que** l'élément d'orthopédie dento-faciale (10) est réalisé entièrement ou en partie en métal.

12. Elément d'orthopédie dento-faciale selon l'une des revendications 1 à 10, **caractérisé en ce que** l'élément d'orthopédie dento-faciale (10) est réalisé entièrement ou en partie en céramique.

13. Elément d'orthopédie dento-faciale selon l'une des revendications précédentes, **caractérisé en ce que** l'élément d'orthopédie dento-faciale forme une attache dite bracket (10) ou un tube buccal ou lingual.

14. Procédé de fabrication d'un élément d'orthopédie dento-faciale selon l'une des revendications précédentes, procédé d'après lequel on munit une surface de base de l'élément, d'une structure de rétention pour améliorer la liaison de collage entre l'élément et une dent, ainsi que d'un marquage pour l'affectation de l'élément à un type de dent, et d'après lequel on munit la surface de base d'une structure de rétention uniquement dans une zone partielle, et on produit le marquage dans la zone restante de la surface de base, exempte de structure de rétention, au moyen d'un rayon laser, **caractérisé en ce que** l'on produit le marquage par traitement de la surface de base à l'aide d'un rayon laser, sous atmosphère de gaz de protection, de manière à ce que le marquage présente une surface ayant subi une réduction.

15. Procédé selon la revendication 14, **caractérisé en ce que** l'on couvre partiellement la zone restante de la surface de base, exempte de structure de rétention, avec le marquage.

16. Procédé selon la revendication 14 ou la revendication 15, **caractérisé en ce que** l'on réalise un usinage ou un traitement additif et/ou soustractif du type physique, chimique ou mécanique, d'une zone partielle de la surface de base, pour produire la structure de rétention.

17. Procédé selon l'une des revendications 14 à 16, **caractérisé en ce que** l'on produit la structure de rétention au moyen d'un rayon laser.

18. Procédé selon la revendication 17, **caractérisé en ce que** l'on utilise un laser YAG.

19. Procédé selon l'une des revendications 14 à 18, **caractérisé en ce que** l'on produit la structure de rétention par traitement de la surface de base à l'aide d'un rayon laser, en présence d'oxygène.

20. Procédé selon l'une des revendications 14 à 19, **caractérisé en ce que** pour la réalisation de la structure de rétention et du marquage, on utilise le même rayon laser, le rayon laser présentant une densité de flux d'énergie plus élevée pour produire la structure de rétention que pour produire le marquage.

21. Procédé selon l'une des revendications 14 à 20, **caractérisé en ce que** pour la réalisation de la structure de rétention et du marquage on utilise le même rayon laser, le rayon laser étant déplacé par-dessus la surface de base selon un mode pas à pas pour produire la structure de rétention, et selon un mode en continu pour produire le marquage.
